# EUROPEAN PATENT APPLICATION

(11) **EP 2 873 506 A1**
(43) Date of publication of application: **20.05.2015**
(21) Application number: 13193554.6
(22) Date of filing: 19.11.2013
(51) Int. Cl.: B29C 47/08, B29C 47/20, B29C 47/92, B29C 47/88

(54) **Method and apparatus for preventing the die drool at plastic pipe extrusion molding**

(71) Applicant: Mir Arastirma ve Gelistirme A.S., 34220 Istanbul (TR)
(72) Inventor: Dogu, Mustafa, 34220 Istanbul (TR); Saygili, Ahmet, 34220 Istanbul (TR); Gemici, Zafer, 34220 Istanbul (TR)
(74) Representative: Sevinç, Erkan

(57) **Abstract**

The present invention relates to a method and apparatus for preventing the die drool at plastic pipe extrusion molding. The proposed apparatus comprises an extrusion die head system having an outer die (1), an inner die (2), a molten polymer flow path for use in production of a polymeric extrudate (10) with an annular cross-sectional geometry having an outer surface (101) and an inner surface (102); the extrusion die head system (11) is provided with a first gas conduit for directing a first gas stream (91) towards the outer surface (101) of the extrudate in proximity of a die face, wherein the extrusion die head system is further provided with a second gas conduit for directing a second gas stream (92) towards the inner surface (102) of the extrudate. A method is also provided for minimizing the die drool formation at production of a polymeric extrudate (10) having an annular cross-section. Also an extruder comprising such extrusion head system is provided.

## Description

The present invention relates to a method and apparatus for preventing die drool formation at extrusion molding of plastic pipes. The proposed apparatus is an extrusion die head system for use in production of polymeric extrudates with annular cross-sectional geometries, provided with a gas conduit where a gas stream is directed to the outer surface of the polymeric extrudate in proximity of the die surface.

Die drool, which is also called die drip, is an unwanted polymer deposit occurring on external surfaces of an extrusion die during polymer extrusion process. In general, die drool initially forms at the intersection of molten polymer, solid die lips, and the surrounding gas phase (gas).

In order to reduce extrusion instabilities several methods were developed until date. As an example, U.S. patent 5,417,907 describes a die plate for use in plastics extrusion, which reduces die drool formation by providing an extrusion orifice having an increased radius in the vicinity of the die face. This document teaches the dimensional ratios for an extrusion die geometry, but said teaching doesn't provide specific instructions for pipe production where temperature profiles occur between inner and outer surfaces of pipe shaped extrudates.

As another example, WO 2008 085 188 A2 describes an extrusion method for production of polymeric film and sheets and minimizing the die drool formation simultaneously. The flow of gas is substantially parallel to one or more surfaces of the extrudate, and the temperature of the gas is about 50°C to about 300°C when it impinges on the surface of the die. The teaching of said document is also not suitable to be used for prevention of die drool in pipe extrusion processes.

As a further example, JP 2011 079 306 describes an extrusion process where a gas is blown from a gas outflow port to the vicinity of the end of the discharge nozzle for hindering the drool deposition at the discharge nozzle. The gas is to be blown towards the outer surfaces of extruded polymer. Obviously said processes are not designed for production of hollow extrudates like pipes.

Primary object of the present invention is to eliminate drawbacks of extrusion molding systems of the prior art.

Another object of the present invention is to provide an extrusion die system for elimination or prevention of die drool formation around die surfaces in proximity of molten polymer exit.

A further object of the present invention is to provide an extrusion die system with gas ducts designed for preventing die drool formation, which system is suitable for use in pipe-shaped extrudate production.

A further object of the present invention is to provide an extrusion die system equipped with gas ducts designed for preventing die drool formation around die surfaces, where the die drool formation is further minimized using graduated extrudate discharge opening geometry.

A further object of the present invention is to provide an extrusion die system with a plurality of gas ducts designed for preventing die drool formation around die surfaces, where a plurality of gas streams are orientated towards both inner and outer surfaces of pipe-shaped extrudate, such that the accumulation of molten polymer to die surfaces is at least minimized or totally eliminated.

A further object of the present invention is to provide an extrusion die system with minimized or eliminated die drool formation, suitable for production of hollow polymeric products with cross-section shapes of e.g. annular or edged polygons.

The present invention relates to a method and apparatus for preventing the die drool at plastic pipe extrusion molding. The proposed apparatus is an extrusion die head system comprising an outer die, an inner die, a molten polymer flow path for use in production of a polymeric extrudate with an annular cross-sectional geometry having an outer surface and an inner surface e.g. a pipe or a hose; the extrusion die head system is provided with a first gas conduit for directing a first gas stream towards the outer surface of the extrudate in proximity of a die face, wherein the extrusion die head system is further provided with a second gas conduit for directing a second gas stream towards the inner surface of the extrudate.

The extrusion die system further comprises an inner gas guide. The surface of the inner gas guide for subjecting with the second gas stream, has the general geometry selected from the list consisting of: cone, pyramid, frustum of cone, and frustum of a pyramid.

Tie head system further comprises an outer gas guide.

Each of inner and outer walls of molten polymer flow path have an at least partly diverging or stepped region for deviating the radii of the inner wall and the outer wall. The radius deviation on inner wall and the radius deviation on outer wall of molten polymer flow path in accordance with said at least partly diverging or stepped region, thus (R3-R1) and (R2-R4), respectively, are different from each other such that the value of (R2-R4) is 2-20%, more preferably 5-15% higher than that of (R3-R1); where R1 is an inner gas guide exit radius, R2 is an outer gas guide exit radius, R3 is an inner gas guide grade radius and R4 is an outer gas guide grade radius. Lengths of at least partly diverging or stepped region of inner and outer walls of molten polymer flow path, which constitute an inner die guide grade depth (L1) and an outer die guide grade depth (L2), respectively, are such that L2 is 2-20%, more preferably 5-15% greater than L1. The molten polymer flow path constitutes a mold exit path depth (L) and a graduated path depth (L3) prior to the arrival of a molten polymer flow to the at least partly diverging or stepped region, where L3 is 3-10 times, more preferably 5-8 times greater than L1.

A method for minimizing the die drool formation at production of a polymeric extrudate having an annular cross-section with continuous and simultaneous provision of a first gas stream and a second gas stream to the proximity of extrudate exit is also provided, wherein the first gas stream is provided to an outer surface of the extrudate, and simultaneously, a second gas stream is provided to an inner surface of the extrudate. A first impact angle (α) is defined between the first gas stream and the outer surface, and a second impact angle (β) is defined between the second gas stream and the inner surface, wherein α and β are both within the range of 0-90°, and more preferably within the range of 10-50°. The temperature of the second gas stream (92) is between -10°C and 10°C, more preferably between -5°C and 5°C.
Also an extruder comprising such extrusion head system is proposed.

Accompanying drawings are given solely for the purpose of exemplifying an extrusion die system whose advantages over prior art will be explained in detail hereinafter:
Fig. 1 demonstrates a perspective view of an extrusion die system according to the present invention.
Fig. 2 demonstrates a longitudinal cross-section view of an extrusion system where an extrusion die system according to the present invention is employed.
Fig. 3 demonstrates a closer look of a longitudinal cross-section view of an extrusion die system according to the present invention.
Fig. 4 demonstrates the C-C detailed view around the molten polymer and gaseous streams exits of an extrusion die system according to the present invention.
Fig. 5 demonstrates the illustration of fluid streams flowing through an extrusion die system according to the present invention, with a longitudinal cross-section view of said system.
Fig. 6 demonstrates the C-C detailed view around the molten polymer and gaseous streams exits of an extrusion die system according to the present invention, with illustrated fluid streams.
Fig. 7 demonstrates (a) front, (b) longitudinal cross-section and (c) perspective views of an inner gas guide according to the present invention.
Fig. 8 demonstrates the longitudinal cross-section of the molten polymer flow path.

The present invention intends to overcome the above explained shortcomings of the prior art by preventing or at least minimizing the formation of die drool by extrusion of pipe-shaped polymeric objects.

The following reference numerals have been used in the appended drawings;
- (1): outer die
- (2): inner die
- (3): molten polymer flow path
- (4): outer gas guide
- (5): gasket
- (6): outer gas inlet
- (6a): outer gas chamber
- (6b): outer gas channel
- (7): inner gas chamber
- (7a): inner gas channel
- (7b): inner gas inlet
- (8): inner gas guide
- (8a): screw holes
- (8b): spacer
- (9): flow path axis
- (10): extrudate
- (11): extrusion die head system
- (12): first gas conduit
- (13): second gas conduit
- (14): die face
- (15): inner wall of the molten polymer flow path
- (16): outer wall of the molten polymer flow path
- (17): at least partly diverging or stepped region
- (91): first gas stream
- (92): second gas stream
- (101): outer surface
- (102): inner surface
- (L1): inner die guide grade depth
- (L2): outer die guide grade depth
- (L3): graduated path depth
- (L): mold exit path depth
- (R1): inner gas guide exit radius
- (R2): outer gas guide exit radius
- (R3): inner gas guide grade radius
- (R4): outer gas guide grade radius
- (α): first impact angle
- (β): second impact angle

The present invention overcomes the above-mentioned shortcomings of the prior art by way of incorporating an extrusion die system with inner (8) and outer (4) gas guides through which gas streams are directed towards outer and inner contact zones between a pipe shaped polymeric product and the die surfaces. The term 'pipe' is used here to define a hollow geometrical body with an indefinite length and having a round shaped or polygonal cross-section.

The present invention provides a method which is focused on reducing or minimizing die drool accumulation on die surfaces in proximity with inner and outer surfaces of a pipe shaped extrudate (10).

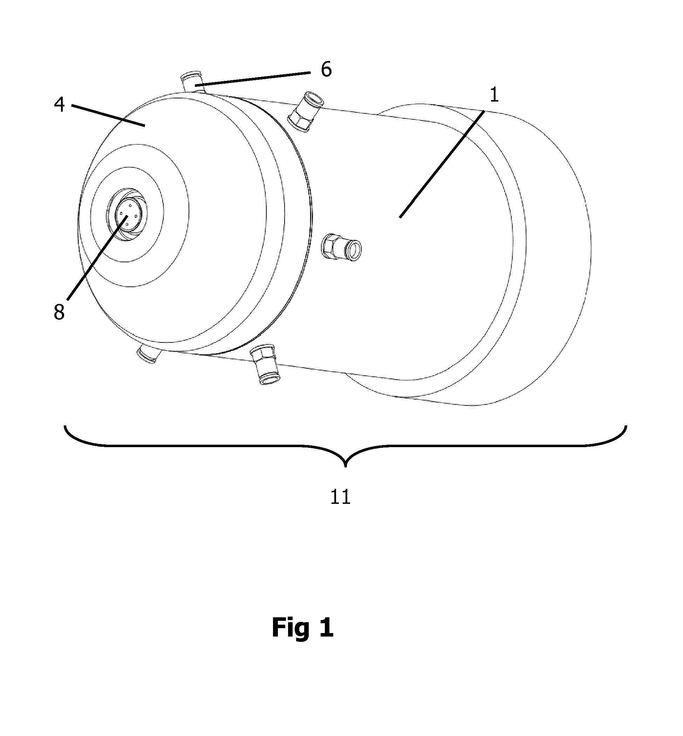

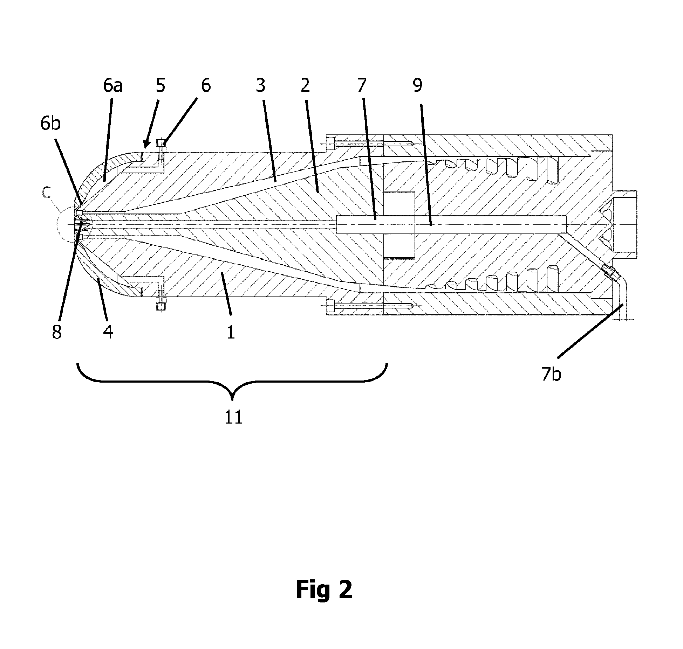

Fig 1 shows a perspective view of the die head system (11) which is equipped with an outer die (1), an outer gas guide (4), an inner gas guide (8) and outer gas inlet (6). For a more comprehensive introduction of the system, Fig 2 provides a longitudinal sectional view. During the extrusion process, two gas streams are flown through the system, which are finally directed to the outer and inner surfaces of the pipe-shaped polymeric extrudate (10).

A first gas stream flows through a first gas conduit (12) comprising an outer gas inlet (6), an outer gas channel (6b), an outer gas chamber (6a), and an outer gas guide (4). The first gas stream is to be directed towards the outer surface of the pipe-shaped polymer enters the system through at least one outer gas inlet (6), and is directed to the outer gas chamber (6a) in order to obtain a uniform pressure. The gas stream then flows through outer gas channel (6b) where the gas flow linear velocity has a greater value and finally leaves the system by impacting the outer surface of the extrudate (10). The impact angle between the molten polymer and said gas stream is between 0-90°. The outer gas chamber (6a) and outer gas channel (6b) are mainly the space between outer die (1) and outer gas guide (4), thus the outer gas guide (4) has a function of providing space between said outer die (1) and outer gas guide (4), where the gas stream is directed towards the outer surface of molten polymer under control. In order to prevent any leakages in other directions, a ring-shaped gasket (5) is placed between the said outer die (1) and outer gas guide (4) such that the outer gas channel (6b) remains as the only escape of said gas stream.

A second gas stream flows through a second gas conduit (13) comprising an inner gas inlet (7b), an inner gas channel (7a), an inner gas chamber (7), and an inner gas guide (8). The second gas stream is to be directed towards the inner surface (102) of the pipe-shaped polymer enters the system through at least an inner gas inlet (7b) is flown around a path axis (9) and then transferred to an inner gas chamber (7). The second gas stream is then flows through an inner gas channel (7a) which has a rather narrow cross-sectional area in order to obtain an increased linear flow speed towards the inner surface (101) of the pipe-shaped molten polymeric extrudate (10). The contact angle between the molten polymer and said second gas stream is between 0-90°, more preferably between 10-50°. The desired escape direction of said second gas stream is arranged by using an inner gas guide (8) which is mounted to the inner die (2) such that said second gas stream flows through a controlled gap between said inner die (2) and inner gas guide (8). As it can be easily conferred by a skilled person in the art with basic knowledge in fluids mechanics, the linear flow speed of the second stream can be increased by narrowing or decreased by broadening said gap during design or assembly steps of the equipment. The surface of the inner gas guide (8) for subjecting with the second gas stream (92), has the general geometry selected from the list comprising cone, pyramid, frustum of cone, and frustum of a pyramid.

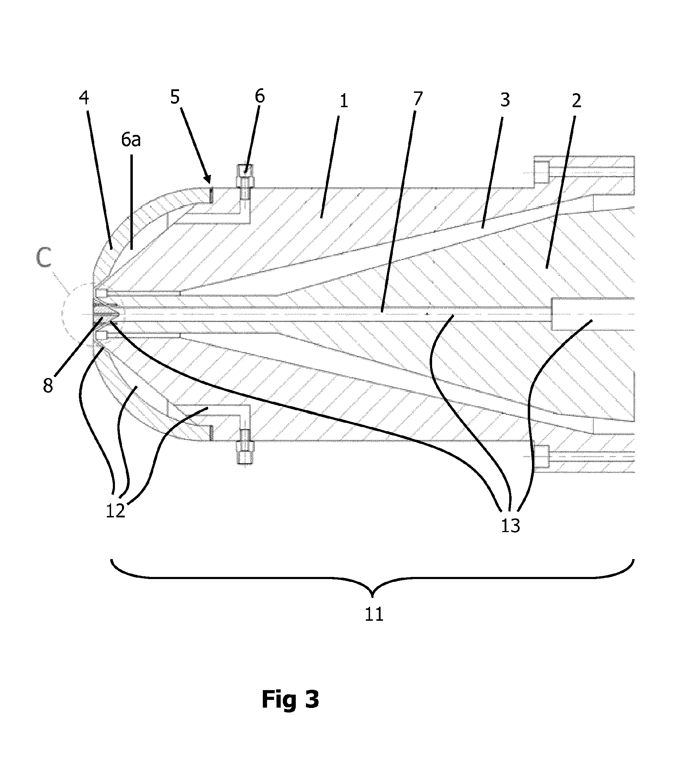

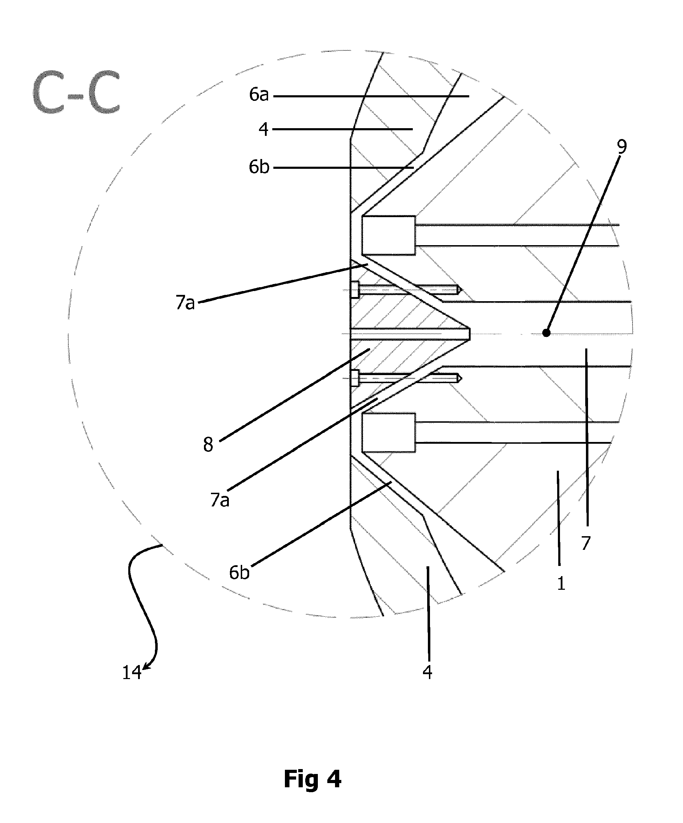

Fig 3 provides a closer longitudinal sectional view of the system, and Fig 4 shows the C-C detailed view showing the molten polymer flow path (3), the inner (7a) and outer (6b) gas channels. An inner wall (15) and an outer wall (16) of the molten polymer flow path constitute radial limits for molten polymer flow. The zone where molten polymer is released from the molten polymer flow path (3) and leaves the extrusion die head system (11) is called die face (13), where it is intended to eliminate or at least minimize the occurrence of die drool. The molten polymer flow path (3) has an at least partly diverging or stepped region (17) for creating sudden expansion zones for the extrudate (10) by modifying the shapes of both inner die (2) and outer die (1). The purpose is to minimize the tendency for die drool formation occurring due to e.g. Barus effect, which is a common phenomenon for a skilled person in the art.

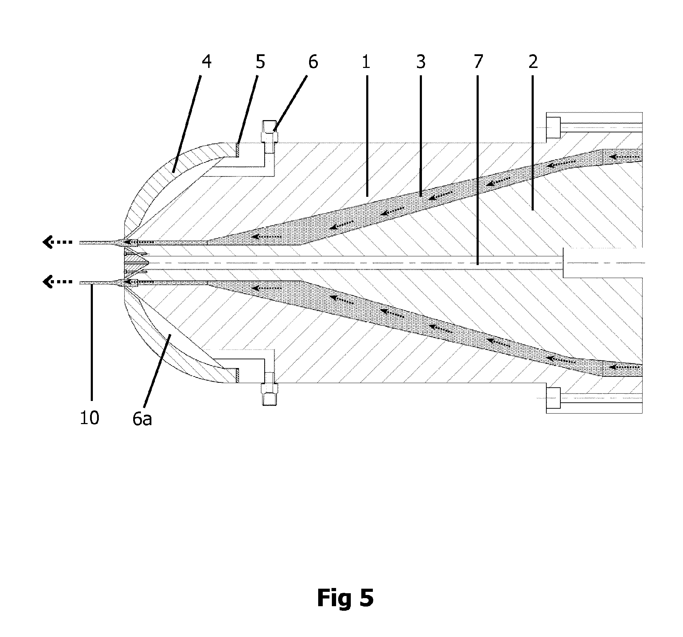

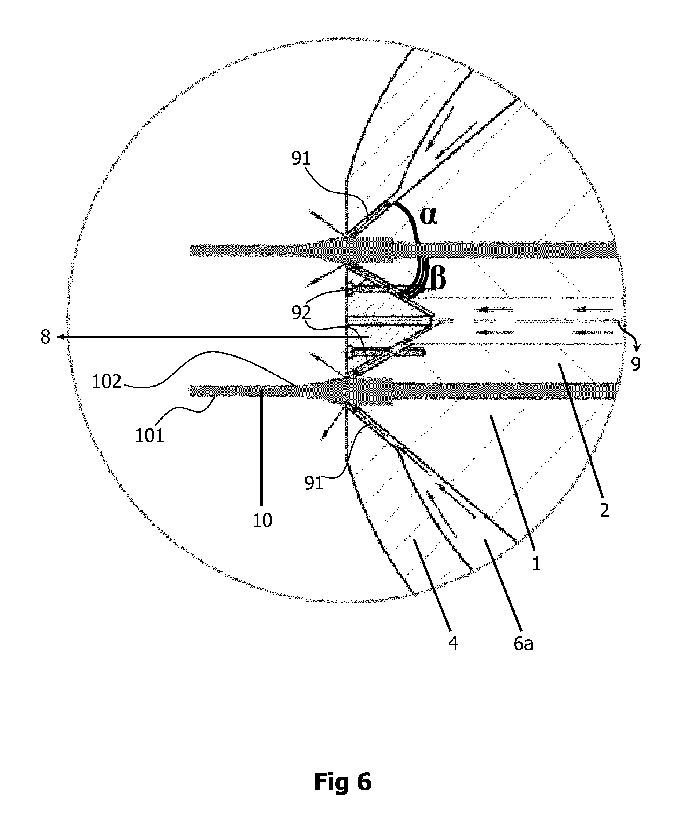

The molten polymer flow direction is shown with dashed arrows on Fig 5. A closer look to the first and second gas streams contacting the molten polymer is provided by Fig 6, where the gas flow is basically shown with arrows.

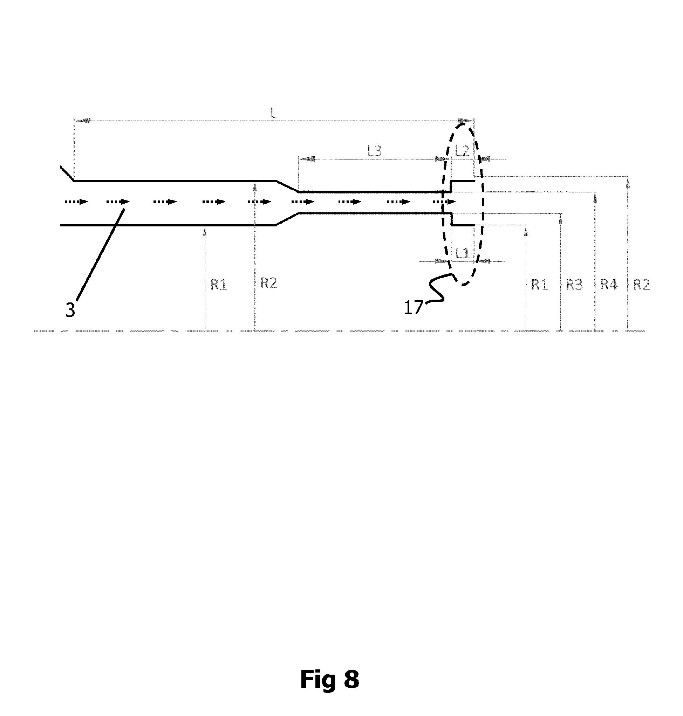

Coded dimensions throughout the molten polymer flow path (3) are shown in Fig 8, where the molten polymer flow direction is indicated with dashed arrows. The inner (R1) and outer (R2) grade radii at the expanded zones of molten polymer flow path (3), have similar values with those of inner and outer gas guides (8 and 4), respectively. The sizes of inner and outer die guide grade depths (L1 and L2) are to be decided according to the polymer composition to be extruded. When said size values are too low, the Barus effect shouldn't be overcome; and with too high values of said size values, the molten polymer velocity profile gets disordered thus resulting in instabilities on extrudate (10) surfaces.

Thus, each of inner (15) and outer (16) walls of molten polymer flow path (3) have an at least partly diverging or stepped region (17) for deviating the radii of the inner wall (15) and the outer wall (16). The radius deviations on inner (15) and outer (16) walls of molten polymer flow path (3) in accordance with said at least partly diverging or stepped region (17), thus (R3-R1) and (R2-R4), respectively, are different from each other such that the value of (R2-R4) is 2-20%, more preferably 5-15% higher than that of (R3-R1); where R1 is an inner gas guide exit radius, R2 is an outer gas guide exit radius, R3 is an inner gas guide grade radius and R4 is an outer gas guide grade radius.

The inner and outer divergence or step extents (R3-R1 and R2-R4, respectively) may be different from each other, since their effects on deviations of inner and outer extrudate surfaces are not the same. When the inner and outer die guide grade depths (L1 and L2, respectively) are equal with each other, the difference between outer gas guide exit radius (R2) and outer gas guide grade radius (R4) may preferably be designed to be in the range of 2-20%, more preferably in the range of 5-15%, and even more preferably around 10% less than the difference between the inner gas guide grade radius (R3) and the inner gas guide exit radius (R1).

Alternatively, when the difference between inner gas guide grade radius (R3) and inner gas guide exit radius (R1) is equal to the difference between the outer gas guide exit radius (R2) and the outer gas guide grade radius (R4), outer die guide grade depth (L2) may preferably be designed to be in the range of 2-20%, more preferably in the range of 5-15%, and even more preferably about 10% less than the inner die guide grade depth (L1).

The mold exit path depth (L) may preferably be more than about 15 times greater than the inner die guide grade depth (L1); and the graduated path depth (L3) may preferably be 3 to 10 times, more preferably 5 to 8 times greater than the inner die guide grade depth (L1). Longer graduated path depths (L3) result in increasing pressure losses throughout molten polymer flow path (3) which may result in die drool formation.

The flowing streams through the system are illustrated in Fig 5, and C-C detailed view in Fig 6 provides a closer view for understanding the contact between gas streams flowing through the inner (7a) and outer (6b) gas channels from inside and outside of the pipe-shaped molten polymer, respectively. Both gas streams push the corresponding polymer surfaces away from terminal die surfaces such that die drool formation is prevented.

The gas stream flowing through the inner gas channel (7a) may preferably be cooled (e.g. around -5°C) and be colder than that of the gas stream flowing through the outer gas channel (6b); which facilitates the cooling of the extrudate (10) upon exiting the extrusion head.

Experimental results provided by the inventors comparing the abovementioned dimensions and corresponding die drool formation extent and product surface quality are given in Table 1. The values on the table are provided by a high density polyethylene (HDPE) pipe production experiment with 180 kg/h molten polymer flow rate, where the pipe outer diameter is 16 mm, the inner gas guide exit radius (R1) and outer gas guide exit radius (R2) are 6.7 mm and 10 mm, respectively, and the mold exit path depth (L) is 35 mm.

**Table 1. Effects of channel dimensions on die drool formation and surface shape.**

| **R3 (mm)** | **R4 (mm)** | **L1 (mm)** | **L2 (mm)** | **L3 (mm)** | **Die drool formation on outer surface of the extrudate (g/h)** | **Die drool formation on inner surface of the extrudate (g/h)** | **Instabilities on extrudate surfaces** |
|---|---|---|---|---|---|---|---|
| 0 | 0 | 0 | 0 | 0 | 12 | 14 | N/A |
| 7.7 | 9 | 0.5 | 0.5 | 6 | 2 | 2.1 | **Visible** |
| 7.7 | 9 | 1 | 1 | 6 | 4 | 4.5 | N/A |
| 7.7 | 9 | 1.1 | 1.2 | 6 | 4 | 4 | N/A |
| 7.7 | 9.1 | 1.1 | 1.1 | 6 | 4 | 4 | N/A |

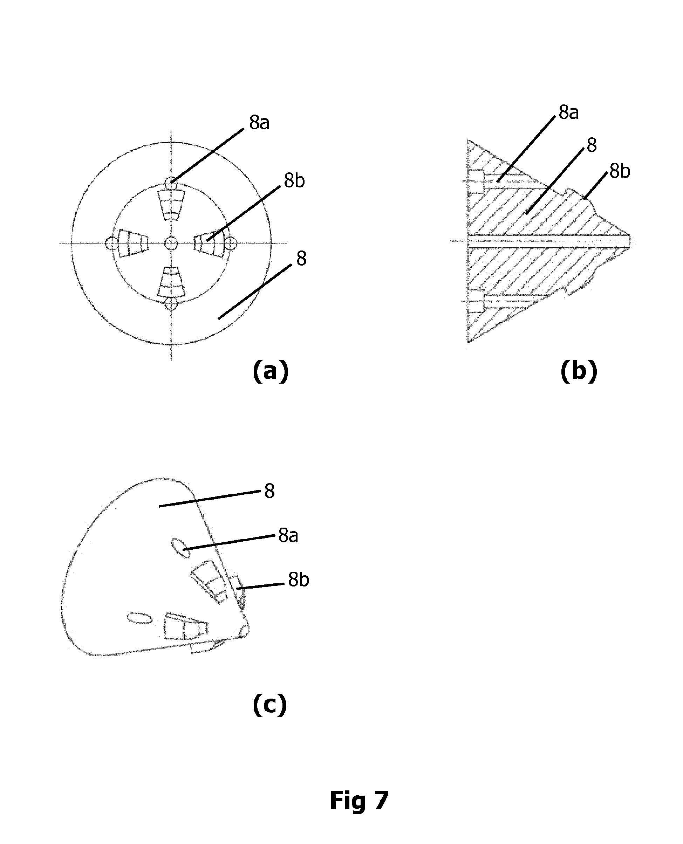

Fig 7 (a), (b) and (c) provide front, longitudinal section and perspective views of inner gas guide (8) according to the present invention. The screw holes (8a) or equivalent connections are provided with intention of adjustable mounting of said inner gas guide (8) to the inner die (2). Spacers (8b) serve for maintaining a certain gap between said inner die (2) and the inner guide (8) and also preventing blockages of the gas flow coming from the inner gas channel (7a). Thus closing of the gap in between the inner die (2) and the inner guide (8) which may occur due to over-tightening of connection means e.g. screws is prevented.

A production method according to the present invention, where production of a polymeric extrudate having an annular cross-section with minimized die drool formation is provided below:
- A molten polymeric fluid mixture flows through a molten polymer flow path (3) towards an extrusion die head system with a die face (14), an outer gas guide (4) and an inner gas guide (8),
- A first gas stream (91) following a first gas conduit (12) comprising an outer gas inlet (6) which is optional, an outer gas chamber (6a) and an outer gas channel (6b) subsequently; is continuously and simultaneously provided and oriented towards the outer surface (101) of the extrudate (10),
- and a second gas stream (92) flowing simultaneous with the first gas stream (101) following a second gas conduit (13) comprising an inner gas inlet (7b) which is optional, an inner gas chamber (7) and an inner gas channel (7a), is continuously and simultaneously provided and oriented towards the inner surface (102) of the extrudate (10).
- a first impact angle (α) is defined between the first gas stream (91) and the outer extrudate surface (101), and a second impact angle (β) is defined between the second gas stream (92) and the inner extrudate surface (102), wherein α and β are both within the range of 0-90°, and more preferably within the range of 10-50°.
- The temperature of the second gas stream (92) is between -10°C and 10°C, more preferably between -5°C and 5°C.

Even though the embodiments shown in figures represent a die head system (11) according to the present invention suitable for an annular pipe extrusion, the invention is not limited with an extrusion die system only for production of pipes with cross-section in shape of an annulus, but the extrusion die head system (11) can also be suitable for extrusion of pipes with annular polygonal cross-sections, according to the above definition of the term 'pipe'.

The extrusion die head system (11) according to the present invention prevents or minimizes possible die drool formation, as well as presumable instabilities due to die drool formation on polymeric pipe-shaped product to be produced using an extrusion die head system (11) according to the present invention.

## Claims

1. An extrusion die head system (11) comprising an outer die (1), an inner die (2), a molten polymer flow path (3) for use in production of a polymeric extrudate (10) with an annular cross-sectional geometry having an outer surface (101) and an inner surface (102);
the extrusion die head system (11) is provided with a first gas conduit (12) for directing a first gas stream (91) towards the outer surface (101) of the extrudate in proximity (14) of a die face,
**characterized in that**
the extrusion die head system (11) is further provided with a second gas conduit (13) for directing a second gas stream (92) towards the inner surface (102) of the extrudate.

2. An extrusion die head system (11) according to Claim 1, wherein the extrusion die system (11) further comprises an inner gas guide (8).

3. An extrusion die head system (11) according to Claim 2, wherein the surface of the inner gas guide (8) for subjecting with the second gas stream (92), has the general geometry selected from the list consisting of: cone, pyramid, frustum of cone, and frustum of a pyramid.

4. An extrusion die head system (11) according to Claim 1 wherein the extrusion die system (11) further comprises an outer gas guide (4).

5. An extrusion die head system (11) according to Claim 1, wherein an inner wall (15) of the molten polymer flow path (3) and an outer wall (16) of the molten polymer flow path of molten polymer flow path (3) have an at least partly diverging or stepped region (17) for deviating the radii of the inner wall (15) and the outer wall (16).

6. An extrusion die head system (11) according to Claim 5 wherein the radius deviation on inner wall (15) and the radius deviation on outer wall (16) of molten polymer flow path (3) in accordance with said at least partly diverging or stepped region (17), thus (R3-R1) and (R2-R4), respectively, are different from each other such that the value of (R2-R4) is 2-20%, more preferably 5-15% higher than that of (R3-R1); where R1 is an inner gas guide exit radius, R2 is an outer gas guide exit radius, R3 is an inner gas guide grade radius and R4 is an outer gas guide grade radius.

7. An extrusion die head system (11) according to Claim 5 wherein the lengths of at least partly diverging or stepped region (17) of inner (15) and outer (16) walls of molten polymer flow path (3), which constitute an inner die guide grade depth (L1) and an outer die guide grade depth (L2), respectively, are such that L2 is 2-20%, more preferably 5-15% greater than L1.

8. An extrusion die head system (11) according to Claim 5 wherein the molten polymer flow path (3) constitutes a mold exit path depth (L) and a graduated path depth (L3) prior to the arrival of a molten polymer flow to the at least partly diverging or stepped region (17), where L3 is 3-10 times, more preferably 5-8 times greater than L1.

9. A method for minimizing the die drool formation at production of a polymeric extrudate (10) having an annular cross-section with continuous and simultaneous provision of a first gas stream (91) and a second gas stream (92) to the proximity of extrudate exit
**wherein**
The first gas stream (91) is provided to an outer surface (101) of the extrudate (10), and simultaneously, a second gas stream (92) is provided to an inner surface (102) of the extrudate (10).

10. A method according to the Claim 9, wherein a first impact angle (α) is defined between the first gas stream (91) and the outer surface (101), and a second impact angle (β) is defined between the second gas stream (92) and the inner surface (102), wherein α and β are both within the range of 0-90°, and more preferably within the range of 10-50°.

11. A method according to the Claim 9, wherein temperature of the second gas stream (92) is between -10°C and 10°C, more preferably between -5°C and 5°C.

12. An extruder comprising an extrusion head system according to Claim 1.
